# EUROPEAN PATENT SPECIFICATION

(11) **EP 2 068 241 B1**
(45) Date of publication and mention of the grant of the patent: **09.01.2019**
(21) Application number: 08253824.0
(22) Date of filing: 27.11.2008
(51) Int. Cl.: G06F 9/451

(54) **System and method for dynamically generating user interfaces for network client devices**
System und Verfahren zur dynamischen Erzeugung von Benutzerschnittstellen für Netz-Client-Geräte
Système et procédé de génération dynamique des interfaces utilisateur pour des dispositifs de clients de réseau

(30) Priority: 06.12.2007 US 999528
(43) Date of publication of application: 10.06.2009
(73) Proprietor: Sony Corporation, Tokyo 108-0075 (JP); Sony Electronics, Inc., Park Ridge, NJ 07656 (US)
(72) Inventor: Georgis, Nikolaos, San Diego, CA 92128 (US)
(74) Representative: D Young & Co LLP

(56) References cited:
- WO-A-99/66394
- US-A1- 2002 180 786
- US-A1- 2003 090 515
- US-A1- 2004 100 505
- US-A1- 2006 242 638

## Description

### Field of the Invention

This invention relates generally to techniques for displaying electronic information, and relates more particularly to a system and method for dynamically generating graphical user interfaces for client devices in an electronic network.

### Background of the Invention

Implementing effective methods for providing user interfaces is a significant consideration for designers and manufacturers of contemporary electronic devices. However, effectively providing user interfaces utilized by devices in an electronic network may create substantial challenges for system designers. For example, enhanced demands for increased device functionality and performance may require more system processing power and require additional software resources. An increase in processing or software requirements may also result in a corresponding detrimental economic impact due to increased production costs and operational inefficiencies.

Furthermore, enhanced device capability to perform various advanced operations may provide additional benefits to a system user, but may also place increased demands on the control and management of various system components. For example, an enhanced electronic network device that dynamically generates a graphical user interface may benefit from an effective implementation because of the large amount and complexity of the interface elements and functionalities involved.

Due to growing demands on system resources and substantially increasing interface functionalities, it is apparent that developing new techniques for providing user interfaces in electronic devices is a matter of concern for related electronic technologies. Therefore, for all the foregoing reasons, developing effective techniques for implementing user interfaces in electronic devices remains a significant consideration for designers, manufacturers, and users of contemporary electronic devices.

A method for ordering selectable functions of a peripheral device is described in US-A-2004/100505 and comprises coupling the peripheral device to a remote device, generating function selection history, and configuring the selectable functions displayed by the peripheral device in accordance with function selection history using data transferred from the remote device to the peripheral device.

A system for dynamically updating user accessible features of a software application on a client computer is described in US-A-2006/242638. The client computer has a user interface, a local usage data file, and a data mining engine. The user interface is adapted to receive operator inputs. The local usage data file is adapted to store usage information corresponding to the operator inputs. The data mining engine is adapted to process the stored usage information and to generate local adjustments to a user interface of the software application based on the operator inputs.

A method of adapting user interface elements based on historical usage is described in WO-A-99/66394. A user interface element is displayed in a menu. In response to receiving an indication of the selection of the user interface element, the selection is stored in a historical usage file that maintains usage information associated with the selected user interface element. The display characteristic of the user interface element can be modified based on the usage information stored in the historical usage file for the selected user interface element.

An intelligent filter is described in US-A-2002/180786 which increases the user-friendliness of a computer graphical user interface (GUI) by determining user preferences based on user interaction with the GUI and changing the GUI accordingly.

### Summary of the Invention

Various respective aspects and features of the invention are defined in the appended claims. Combinations of features from the dependent claims may be combined with features of the independent claims as appropriate and not merely as explicitly set out in the claims.

In accordance with embodiments of the present invention, a system and method for dynamically generating graphical user interfaces for client devices in an electronic network are disclosed. In one embodiment, an electronic network may initially be implemented in any effective manner. For example, in certain embodiments, the electronic network may include, but is not limited to, a network server and a plurality of client devices. Some or all of the client devices in the electronic network individually compile various predefined types of client statistics in any effective manner. The client statistics may include any desired types of information regarding the corresponding client devices. For example, client statistics may include information regarding the frequency of usage for various functions, icons, menu items, or other components of graphical user interfaces from the respective client devices.

The client devices transmit the client statistics to a statistics database of the network server by using any appropriate techniques. A recommendation engine of the network server may then advantageously perform a statistics analysis procedure upon the received client statistics. The recommendation engine responsively generates user interface recommendations based upon the results of the statistics analysis procedure. In certain embodiments, the user interface recommendations may based, as least in part, upon the frequency of usage of corresponding user interface elements or functionalities. The user interface recommendations may also be partially based on information from client profiles regarding device users of the client devices.

The network server then determines whether the respective client devices are capable of receiving and implementing the user interface recommendations in real time. For example, factors such as device processing capabilities and network transfer speeds may be evaluated to determine whether real-time updates are possible. If the network server determines that real-time updates are possible, then the network server sends the new user interface recommendations directly to display processors of the respective real-time client devices. The real-time client devices may then utilize the new user interface recommendations to immediately update the respective user interfaces presented on corresponding device displays.

Alternately, if the network server determines that real-time updates are not possible, then the network server sends the new user interface recommendations to the hard drives of respective non-real-time client devices for temporary storage. The non-real-time client devices may then access the new user interface recommendations when ready to update the respective user interfaces presented on corresponding device displays. The foregoing process may then return and repeatedly prepare new user interface recommendations for updating the user interfaces of the various client devices. For at least the foregoing reasons, embodiments of the present invention therefore provide an improved system and method for dynamically generating graphical user interfaces for client devices in an electronic network.

### Brief Description of the Drawings

Embodiments of the invention will now be described with reference to the accompanying drawings, throughout which like parts are referred to by like references, and in which:
FIG. 1A is a block diagram of an electronic network, in accordance with one embodiment of the present invention;
FIG. 1B is a block diagram of the peer-to-peer network of FIG. 1A, in accordance with one embodiment of the present invention;
FIG. 2 is a block diagram of the network server of FIG. 1, in accordance with one embodiment of the present invention;
FIG. 3 is a block diagram of the server memory of FIG. 2, in accordance with one embodiment of the present invention;
FIG. 4 is a block diagram of the recommendation engine of FIG. 3, in accordance with one embodiment of the present invention;
FIG. 5 is a block diagram of a client device from FIG. 1A, in accordance with one embodiment of the present invention;
FIG. 6 is a block diagram of the device memory of FIG. 5, in accordance with one embodiment of the present invention;
FIG. 7 is a block diagram of a client profile from FIG. 3, in accordance with one embodiment of the present invention;
FIG. 8 is a diagram of a recommendation list from FIG. 4, in accordance with one embodiment of the present invention;
FIGS. 9A and 9B provide a flowchart of method steps for dynamically generating graphical user interfaces for client devices in an electronic network, in accordance with one embodiment of the present invention.

### Description of the Example Embodiments

Embodiments of the present invention relate to an improvement in electronic display management techniques. The following description is presented to enable one of ordinary skill in the art to make and use the invention, and is provided in the context of a patent application and its requirements. Various modifications to the disclosed embodiments will be readily apparent to those skilled in the art, and the generic principles herein may be applied to other embodiments. Therefore, the present invention is not intended to be limited to the embodiments shown, but is to be accorded the widest scope consistent with the principles and features described herein.

One embodiment of the present invention comprises a system and method for dynamically generating graphical user interfaces for client devices in an electronic network, and includes a network server and a network of client devices. Each of the client devices monitors and compiles predefined client statistics regarding the usage characteristics and selection frequencies for various elements of corresponding user interfaces. A recommendation engine of the network server then accesses and analyzes the client statistics to thereby generate individual user interface recommendations for the various client devices. The client devices may then dynamically update their respective user interfaces in accordance with respective individual user interface recommendations.

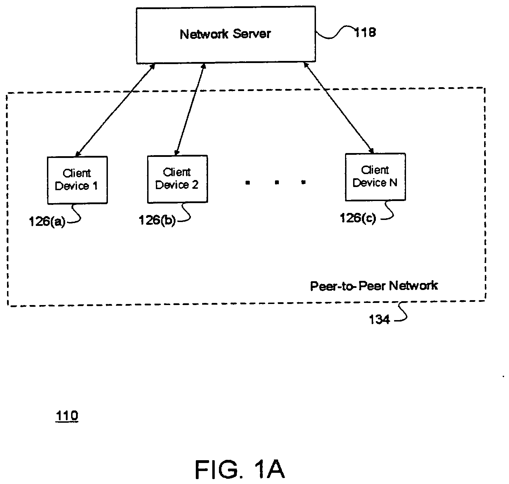

Referring now to FIG. 1A, a block diagram of an electronic network 110 is shown, in accordance with one embodiment of the present invention. In the FIG. 1A embodiment, electronic network 110 may include, but is not limited to, network server 118 and a plurality of client devices 126. In alternate embodiments, electronic network 110 may be implemented by utilizing components and configurations in addition to, or instead of, certain of those components and configurations discussed in conjunction with the FIG. 1A embodiment.

In the FIG. 1A embodiment, network server 118 may be operated by a network support entity to provide support for electronic network 110. Network server 118 may utilize a recommendation engine to dynamically create appropriate graphical user interface (GUI) recommendations for automatically and transparently downloading to one or more of the client devices 126 in peer-to-peer network 134. In response the various client devices 126 may display corresponding dynamically-updateable graphical user interfaces (GUIs) that are based upon the respective individualized GUI recommendations provided by network server 118.

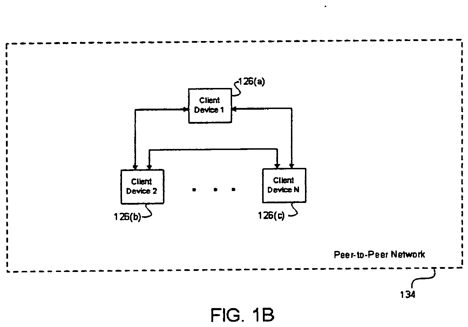

In the FIG. 1A embodiment, client devices 126 may include an electronic device 1 (126(a)) through an electronic device N 126(c). In the FIG. 1A embodiment, each of the client devices 126 may bi-directionally communicate directly with other ones of the client devices 126 by utilizing any appropriate peer-to-peer communication techniques or other effective communication methods. Further details regarding the implementation and utilization of the FIG. 1A electronic network 110 are discussed below in conjunction with FIG. 1B through FIG. 9B.

Referring now to FIG. 1B, a block diagram of the FIG. 1A peer-to-peer network 134 is shown, in accordance with one embodiment of the present invention. The FIG. 1B embodiment includes a client device 1 (126(a)), a client device 2 (126(b)), through a client device N (126(a)). In alternate embodiments, peer-to-peer network 134 may be implemented by utilizing components and configurations in addition to, or instead of, certain of those components and configurations discussed in conjunction with the FIG. 1B embodiment. Furthermore, peer-to-peer network 134 may be implemented to include any desired number of client devices 126.

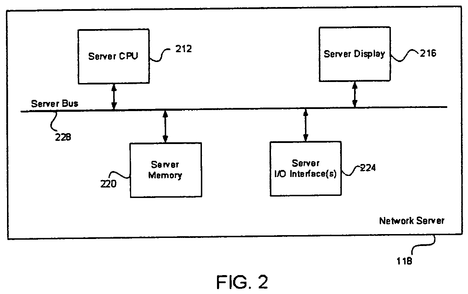

In the FIG. 1B embodiment, each of the client devices 126 may bi-directionally communicate directly with any other of the client devices 126 by utilizing any desired peer-to-peer communication techniques or other effective communication methods. For example, client device 1 (126(a)) may bi-directionally communicate directly with either client device 2 (126(b)) or client device N (126(c)), and similarly, client device 2 (126(b) may bi-directionally communicate directly with client device N (126(c)). Furthermore, in the FIG. 1B embodiment, any of the client devices 126 in peer-to-peer network 134 may perform a peer-to-peer content transfer procedure to transfer content information (previously downloaded from network server 118) to any of the other client devices 126 in peer-to-peer network 134. Additional details regarding the utilization of the FIG. 1B peer-to-peer network 134 are further discussed below in conjunction with FIGS. 2 through 9B.

Referring now to FIG. 2, a block diagram of the FIG. 1A network server 118 is shown, in accordance with one embodiment of the present invention. In the FIG. 2 embodiment, network server 118 includes, but is not limited to, a server central processing unit (server CPU) 212, a server display 216, a server memory 220, and one or more server input/output interface(s) (server I/O interface(s)) 224. The foregoing components of network server 118 may be coupled to, and communicate through, a server bus 228. In alternate embodiments, network server 118 may alternately be implemented using components and configurations in addition to, or instead of, certain of those components and configurations discussed in conjunction with the FIG. 2 embodiment.

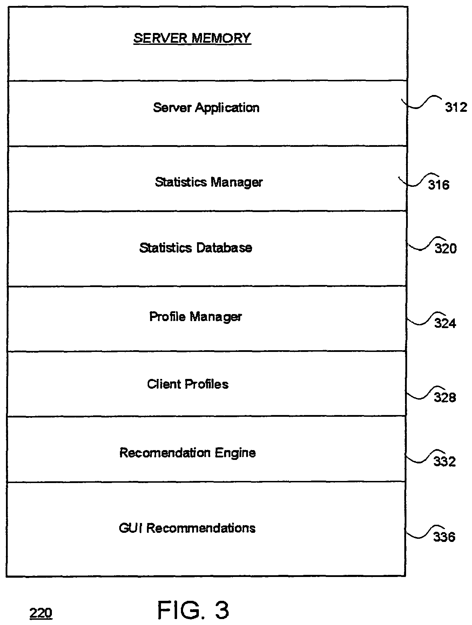

In the FIG. 2 embodiment, server CPU 212 may be implemented to include any appropriate and compatible microprocessor device that preferably executes software instructions to thereby control and manage the operation of network server 118. The FIG. 2 server display 216 may include any effective type of display technology including a cathode-ray-tube monitor or a liquid-crystal display device with an appropriate screen for displaying various information to a server user. In the FIG. 2 embodiment, server memory 220 may be implemented to include any combination of desired storage devices, including, but not limited to, read-only memory (ROM), random-access memory (RAM), and various types of non-volatile memory, such as floppy disks, memory sticks, compact disks, or hard disks. The contents and functionality of server memory 220 are further discussed below in conjunction with FIG. 3.

In the FIG. 2 embodiment, server I/O interface(s) 224 may include one or more input and/or output interfaces to receive and/or transmit any required types of information by network server 118. Server I/O interface(s) 224 may include one or more means for allowing a server user to communicate with network server 118. The implementation and utilization of network server 118 is further discussed below in conjunction with FIGS. 3-4 and 7-9B.

Referring now to FIG. 3, a block diagram of the FIG. 2 server memory 220 is shown, in accordance with one embodiment of the present invention. In the FIG. 3 embodiment, server memory 220 may include, but is not limited to, a server application 312, a statistics manager 316, a statistics database 320, a profile manager 324, client profiles 328, a recommendation engine 332, and graphical user interface (GUI) recommendations 336. In alternate embodiments, server memory 220 may include various other components and functionalities in addition to, or instead of, certain those components and functionalities discussed in conjunction with the FIG. 3 embodiment.

In the FIG. 3 embodiment, server application 312 may include program instructions that are preferably executed by server CPU 212 (FIG. 2) to perform various functions and operations for network server 118. The particular nature and functionality of server application 312 typically varies depending upon factors such as the specific type and particular functionality of the corresponding network server 118.

In the FIG. 3 embodiment, network server 118 may utilize a statistics manager 316 for monitoring and compiling individual client statistics from the various client devices 126 to reflect any appropriate information and characteristics of the client devices 126. For example, statistics database 320 may include any desired type of statistical information regarding the utilization of graphical user interfaces on displays of client devices 126 in peer-to-peer network 134. In certain embodiments, statistics manager 316 may periodically query client devices 126 to obtain updated client statistics for statistics database 320.

Alternately, client devices 126 may automatically inform statistics manager 316 regarding any new client statistics information, and statistics manager 316 may then update statistics database 320. In the FIG. 3 embodiment, client statistics may be collected for each client device 126, and may include, but are not limited to, client navigation history with corresponding GUIs, time information for the navigation history, other GUI usage statistics (such as usage frequency and usage type), and any other relevant statistical transfer patterns or information.

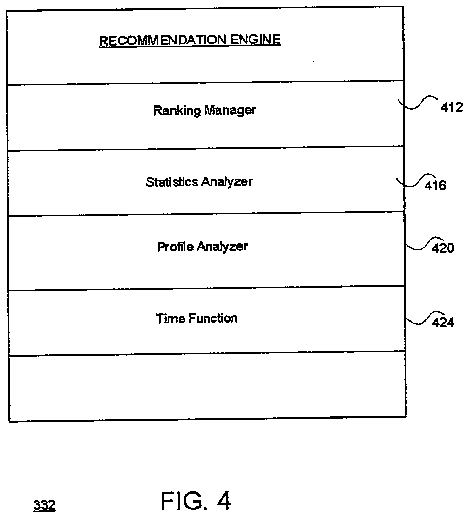

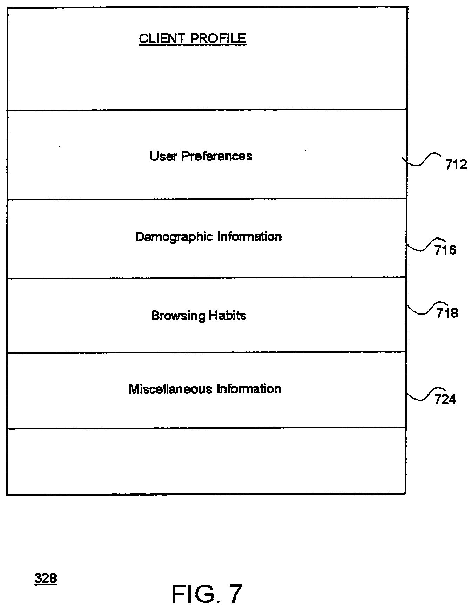

In the FIG. 3 embodiment, profile manager 324 may be utilized to compile and analyze client profiles 328 that each include information corresponding to the client users of respective client devices 126 (FIG. 1). One embodiment of an exemplary client profile 328 is further discussed below in conjunction with FIG. 7. In the FIG. 3 embodiment, recommendation engine 332 may be utilized to analyze various types of predefined client statistics and profile information to create GUI recommendations 336 for downloading specific GUI configurations and functionalities to appropriate client devices 126. Additional details regarding the operation and implementation of recommendation engine 332 are further discussed below in conjunction with FIGS. 4 and 8-9B.

Referring now to FIG. 4, a diagram of the FIG. 3 recommendation engine 332 is shown, in accordance with one embodiment of the present invention. In the FIG. 4 embodiment, recommendation engine 332 may include, but is not limited to, a ranking manager 412, a statistics analyzer 416, a profile analyzer 420, and a time function module 424. In alternate embodiments, recommendation engine 332 may include other elements and configurations in addition to, or instead of, certain of those elements and configurations discussed in conjunction with the FIG. 4 embodiment.

In the FIG. 4 embodiment, recommendation engine 332 may utilize a ranking manager 412 for coordinating a user interface generation procedure for analyzing various relevant types of individual client statistics and client profiles for a given client device 126 (FIG. 1) to thereby generate a corresponding one of the GUI recommendations 336 (FIG. 3) for the particular client device 126. For example, ranking manager 412 may dynamically generate an individual GUI recommendation 336 for the client device 126 by utilizing a statistics analyzer 416 to analyze predefined client statistics from statistics database 320 (FIG. 3).

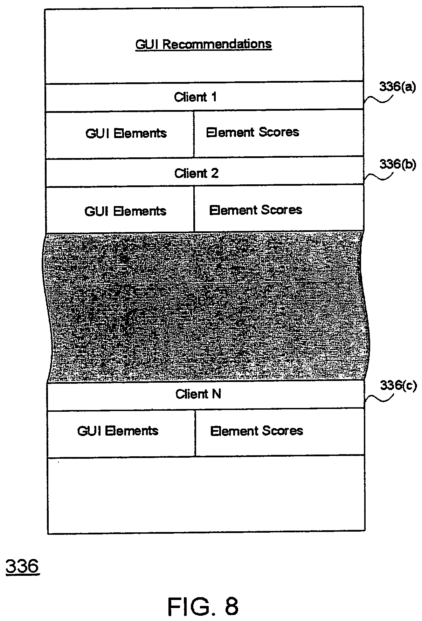

The client statistics may include any appropriate information or data including, but not limited to, GUI usage history, device navigation history, time functions for GUI selections. In addition, ranking manager 412 may also utilize a profile analyzer 420 to analyze information from a corresponding client profile 328 (FIG. 3). The functionality and utilization of recommendation engine 332 are further discussed below in conjunction with FIGS. 8-9B.

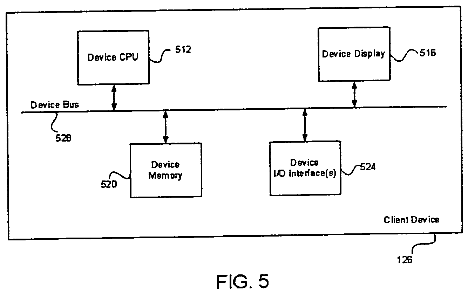

Referring now to FIG. 5, a block diagram of a FIG. 1A client device 126 is shown, in accordance with one embodiment of the present invention. In the FIG. 5 embodiment, client device 126 may include, but is not limited to, a device central processing unit (device CPU) 512, a device display 516, a device memory 520, and one or more device input/output interface(s) (device I/O interface(s)) 524. The foregoing components of client device 126 may be coupled to, and communicate through, a device bus 528.

In alternate embodiments, client device 126 may readily be implemented using various components and configurations in addition to, or instead of, certain of those components and configurations discussed in conjunction with the FIG. 5 embodiment. Furthermore, in the FIG. 5 embodiment, client device 126 may be implemented as any type of appropriate electronic device. For example, in certain embodiments, client device 126 may be implemented as any type of stationary or portable consumer-electronics device, such as a television, a personal computer, a settop box, an audio-visual entertainment device, or a personal digital assistant (PDA).

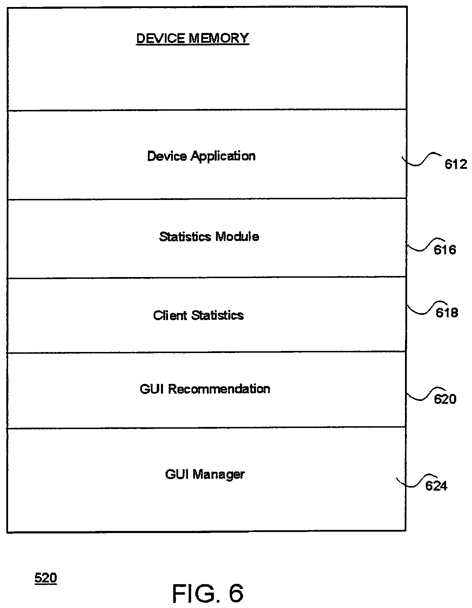

In the FIG. 5 embodiment, device CPU 512 may be implemented to include any appropriate and compatible microprocessor device that preferably executes software instructions to thereby control and manage the operation of client devices 126. The FIG. 5 device display 516 may include any effective type of display technology including a cathode-ray-tube monitor or a liquid-crystal display device with an appropriate screen for displaying various information to a device user. In the FIG. 5 embodiment, device memory 520 may be implemented to include any combination of desired storage devices, including, but not limited to, read-only memory (ROM), random-access memory (RAM), and various types of non-volatile memory, such as floppy disks, memory sticks, compact disks, or hard disks. The contents and functionality of device memory 520 are further discussed below in conjunction with FIG. 6.

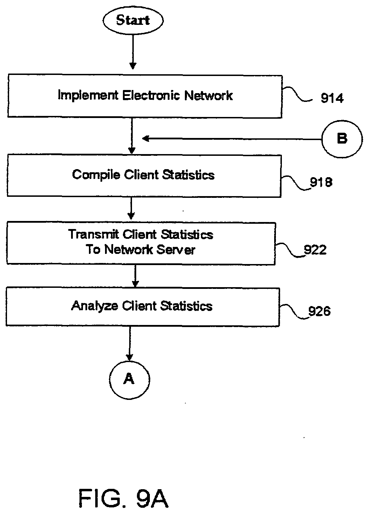

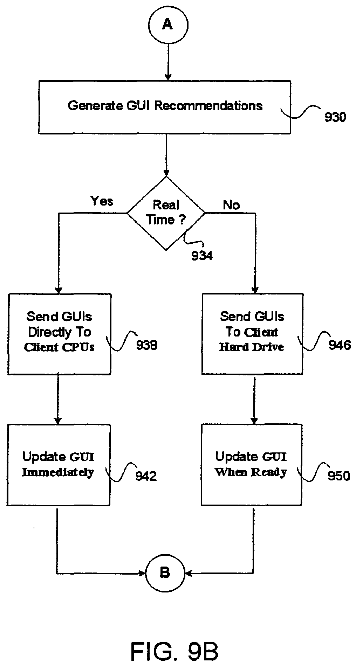

In the FIG. 5 embodiment, device I/O interface(s) 524 may include one or more input and/or output interfaces to receive and/or transmit any required types of information by client device 126. Device I/O interface(s) 524 may include one or more means for allowing a device user to communicate with other entities in electronic network 110 (FIG. 1A). For example, the foregoing means may include a keyboard device, a wireless remote-control device, a speech-recognition module with corresponding microphone, a graphical user interface with touch-screen capability, a hand-held device controller unit, or a selection button array mounted externally on client device 126. The implementation and utilization of client device 126 are further discussed below in conjunction with FIGS. 6 and 9.

Referring now to FIG. 6, a block diagram of the FIG. 5 device memory 520 is shown, in accordance with one embodiment of the present invention. In the FIG. 6 embodiment, device memory 520 includes, but is not limited to, a device application 612, a statistics module 616, client statistics 618, a GUI recommendation 620, and a GUI manager 624. In alternate embodiments, device memory 520 may include various other components and functionalities in addition to, or instead of, certain of those components and functionalities discussed in conjunction with the FIG. 6 embodiment.

In the FIG. 6 embodiment, device application 612 may include program instructions that are preferably executed by a device CPU 512 (FIG. 5) to perform various functions and operations for a client device 126. The particular nature and functionality of device application 612 typically varies depending upon factors such as the specific type and particular functionality of the corresponding client device 126.

In the FIG. 6 embodiment, client device 126 may utilize statistics module 616 to track and compile client statistics 618 by utilizing any appropriate techniques. For example, statistics module 616 may record each action taken or selection made by a device user with respect to a GUI displayed on client device 126. Client statistics 618 may then be transferred to statistics database 320 of network server 118 for analysis by statistics manager 316 and recommendation engine 332.

In the FIG. 6 embodiment, network server 118 may then responsively send an individualized GUI recommendation 620 back to client device 126. In response, a GUI manager 624 may dynamically update a device display 516 to reflect the updated GUI recommendation 620 from network server 118. The dynamic updating of the GUI on client device 126 is further discussed below in conjunction with FIGS. 9A-9B.

Referring now to FIG. 7, a block diagram of a FIG. 3 client profile 328 is shown, in accordance with one embodiment of the present invention. In the FIG. 7 embodiment, client profile 328 includes, but is not limited to, user preferences 712, demographic information 716, browsing habits 718, and miscellaneous information 724. In alternate embodiments, client profile 328 may include other components and information in addition to, or instead of, certain of those components and information discussed in conjunction with the FIG. 7 embodiment.

In the FIG. 7 embodiment, user preferences 712 may include any type of information regarding the device user of a given client device 126. For example, user preferences 712 may include, but is not limited to, preferred icon colors, icon locations, menu/icon elements, and menu/icon types for a GUI on client device 118. In addition, the FIG. 7 client profile 328 may include any desired type of demographic information 716 regarding a corresponding device user. For example, demographic information 716 may include, but is not limited to, a client age, a client gender, a client location, a client ethnicity, a client marital status, client family information, a client annual income bracket, a client occupation, client hobbies, client interests, and a client political affiliation.

In the FIG. 7 embodiment, client profile 328 may include any appropriate information regarding the browsing habits 718 of a particular device user when searching or viewing information on the Internet or other information source via a corresponding client device 126. In the FIG. 7 embodiment, client profile 328 may also include any other desired type of miscellaneous profile information 724. For example, client profile 328 may be implemented to include various types of information about the hardware and/or software configurations and capabilities of a corresponding client device 126. In certain embodiments, recommendation engine 332 may utilize predefined information from client profile 328 when generating a GUI recommendation 620 for a particular client device 126.

Referring now to FIG. 8, a diagram of the FIG. 3 GUI recommendations 336 is shown, in accordance with one embodiment of the present invention. In the FIG. 8 embodiment, GUI recommendations 336 include, but are not limited to, a series of GUI recommendations 336 that each correspond to a different client device 126 in electronic network 110 (FIG. 1). In alternate embodiments, GUI recommendations 336 may include other components and information in addition to, or instead of, certain of those components and information discussed in conjunction with the FIG. 8 embodiment.

In the FIG. 8 embodiment, GUI recommendations 336 includes a GUI recommendation A 336(a) through a GUI recommendation N 336(c) that each has corresponding GUI elements with associated element scores. In the FIG. 8 embodiment, the GUI elements may be any components, characteristics, parameters, or other information related to a dynamic GUI presented on a host client device 126. For example, GUI elements may include whether to display or conceal various pre-defined icons or menu listings, specific icon or menu locations/orderings on a device display 516 (FIG. 5), GUI color characteristics for GUI items or for portions of a GUI on device display 516, and various types of selectable GUI functionalities.

In accordance with an embodiment of the present invention, recommendation engine 332 (FIG. 3) of network server 118 analyzes the various client statistics and client profile from a client device 126, and then assigns respective element scores to the various GUI elements. For example, in certain embodiments, elements scores may be awarded based upon the frequency of a corresponding GUI element's usage in client device 126. Recommendation engine 332 may then evaluate the various element scores to generate a corresponding GUI recommendation 336 to a client device 126. The optimal element scores therefore would indicate popular GUI functions, and would be included in the GUI recommendation 336. Conversely, unpopular GUI elements may be concealed or deleted in certain instances. In certain embodiments, GUI recommendations 336 may give display priority to GUI elements that have element scores that are higher than a predetermined selection threshold value.

In the FIG. 8 embodiment, a ranking manager 412 of recommendation engine 332 (FIG. 4) calculates the element scores to generate the GUI recommendations 336 by analyzing any appropriate types of information. For example, ranking manager 412 may generate a GUI recommendation 336 for a given client device 126 by analyzing pre-determined ranking criteria that may include client statistics from a statistics database 320, device user attributes, and client device characteristics from a corresponding client profile 328 (FIG. 7).

Furthermore, ranking manager 412 may analyze the predetermined ranking criteria by utilizing any effective techniques and procedures. For example, in certain embodiments, ranking manager 412 may perform a weighted averaging of the different ranking factors from the ranking criteria. Each of the various ranking factors may be associated with a different weighting value that represents the approximate significance of the corresponding ranking factor. In addition, in certain embodiments, a time function module 424 (FIG. 4) of recommendation engine 332 may calculate different element scores for the various GUI elements depending upon a time parameter that varies depending, for example, upon the time of day, week, month, or year.

In certain embodiments, recommendation engine 332 may analyze individual client statistics 618 from a given client device 126 to determine a corresponding GUI recommendation 336 for that client device 126. In addition, recommendation engine 332 may also analyze group client statistics 618 that represent information from some or all of the different individual client statistics 618 of the various client devices 126 to thereby generate respective GUI recommendations 336 for the client devices 126.

Embodiments of the present invention have been discussed in the context of a recommendation engine 332 that is hosted by a network server 118. In alternate embodiments, the recommendation engine 332 may reside on any appropriate entity. For example, in certain embodiments, each client device 126 may support a recommendation engine 332 for dynamically generating GUI recommendations 336 in a localized manner. The generation and utilization of GUI recommendations 336 are further discussed below in conjunction with FIGS. 9A and 9B.

Referring now to FIGS. 9A and 9B, a flowchart of method steps for dynamically generating graphical user interfaces for client devices in an electronic network is shown, in accordance with one embodiment of the present invention. The flowchart of FIGS. 9A and 9B is presented for purposes of illustration, and in alternate embodiments, the present invention may utilize steps and sequences other than those steps and sequences discussed in conjunction with the embodiment of FIGS. 9A and 9B.

In the FIG. 9A embodiment, in step 914, an electronic network 110 is implemented in any effective manner. For example, in certain embodiments, electronic network 110 may include, but is not limited to, a network server 118 and a plurality of client devices 126. In step 918, some or all of the client devices 126 in the electronic network 118 individually compile various predefined types of client statistics in any effective manner. The client statistics may include any desired types of information regarding the corresponding client devices. For example, client statistics may include information regarding the frequency of usage for various functions, icons, menu items, or other components of GUIs from the respective client devices 126.

In step 922, the client devices transmit the client statistics to a statistics database 320 of the network server by using any appropriate techniques. In step 926, a recommendation engine 332 of the network server 118 may then advantageously perform a statistics analysis procedure upon the received client statistics. The FIG. 9A process then advances to step 930 of FIG. 9B through a connector A. In step 930 of FIG. 9B, the recommendation engine 332 generates GUI recommendations 336 based upon the results of the statistics analysis procedure. In certain embodiments, the GUI recommendations 336 may based, as least in part, upon the frequency of usage of corresponding GUI elements. The GUI recommendations 336 may also include information from client profiles 328 corresponding to device users of the client devices 126.

In step 934, network server 118 determines whether the respective client devices 126 are capable of receiving and implementing the GUI recommendations 336 in real time. For example, factors such as device processing capabilities and network transfer speeds may be evaluated to determine whether real-time GUI updates are possible. If network server 118 determines that real-time GUI updates are possible, then in step 938, network server 118 sends the new GUI recommendations 336 directly to the CPUs 512 of respective real-time client devices 126. In step 942, those real-time client devices 126 may then utilize the new GUI recommendations 336 to immediately update the respective GUIs presented on corresponding device displays 516.

However, in step 934, if network server 118 determines that real-time GUI updates are not possible, then in step 946, network server 118 sends the new GUI recommendations 336 to the hard drives 520 of respective non-real-time client devices 126 for temporary storage. In step 950, those non-real-time client devices 126 may then access the new GUI recommendations 336 when ready to update the respective GUIs presented on corresponding device displays 516. The FIG. 9B process may then return to step 918 of FIG. 9A to repeatedly prepare new GUI recommendations 336 for client devices 126. For at least the foregoing reasons, the present invention therefore provides an improved system and method for dynamically generating graphical user interfaces for client devices in an electronic network.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for dynamically implementing user interfaces in an electronic network (110), comprising:
client devices (126) that are coupled to said electronic network (110), said client devices (126) compiling client statistics regarding usage characteristics of said user interfaces; and
a recommendation engine (332) that analyzes said client statistics to generate user interface recommendations wherein said user interface recommendations each include a plurality of user interface elements for which said recommendation engine (332) separately evaluates corresponding ones of said client statistics, said recommendation engine (332) utilizing client profile information (328) regarding respective device users and said client devices when generating said user interface recommendations, said client devices dynamically updating said user interfaces according to said user interface recommendations.

2. The system of claim 1 wherein said recommendation engine (332) is implemented on a network server (118) that bi-directionally communicates with each of said client devices (126) in said electronic network (110).

3. The system of claim 1 wherein said user interfaces are implemented as graphical user interfaces located on respective display devices (516) of said client devices (126).

4. The system of claim 1 wherein said client statistics include client navigation histories, time information for said client navigation histories, and usage statistics for respective user interface functionalities.

5. The system of claim 1 wherein said recommendation engine (332) analyzes said client statistics to derive a statistical model representing frequencies of usages for user interface functionalities, said recommendation engine (332) utilizing said statistical model to generate said user interface recommendations.

6. The system of claim 5 wherein said user interface recommendations give a display priority to any frequently-utilized ones of said user interface functionalities with respect to other infrequently-utilized ones of said user interface functionalities.

7. The system of claim 1 wherein said user interface elements include whether to display or conceal various pre-defined icons and menu listings, specific icon or menu locations/orderings, color characteristics for said user interface elements and portions of said user interface on said display device (516), and different types of selectable user interface functionalities.

8. The system of claim 1 wherein said recommendation engine (332) includes a time function module that calculates different element scores for said user interface elements depending upon a time function that varies depending upon a time-of-day parameter, a time-of-week parameter, a time-of-month parameter, and a time-of-year parameter.

9. The system of claim 1 wherein said client profile information (328) includes user preferences, demographic information, browsing habits, and client device information.

10. The system of claim 1 wherein said recommendation engine utilizes individual client statistics and group client statistics to generate said user interface recommendations, said individual client statistics being from each of said client devices, said group client statistics representing combined statistical information from some or all of said client devices.

11. The system of claim 1 wherein a network server (118) periodically polls said client devices (126) to obtain said client statistics for locally storing in a central statistics database (320).

12. The system of claim 1 wherein said recommendation engine (332) calculates element scores for user interface elements based upon respective usage frequency characteristics and other scoring data from said client statistics.

13. A method for dynamically implementing user interfaces in an electronic network, comprising:
utilizing client devices to compile client statistics regarding usage characteristics of said user interfaces;
analyzing said client statistics with a recommendation engine to generate user interface recommendations wherein said user interface recommendations each include a plurality of user interface elements for which said recommendation engine (332) separately evaluates corresponding ones of said client statistics, said recommendation engine (332) utilizing client profile information (328) regarding respective device users and said client devices when generating said user interface recommendations; and
updating said user interfaces dynamically according to said user interface recommendations.

## Patentansprüche

1. System zum dynamischen Implementieren von Benutzerschnittstellen in einem elektronischen Netzwerk (110), umfassend:
Clientvorrichtungen (126), die an das elektronische Netzwerk (110) gekoppelt sind, wobei die Clientvorrichtungen (126) Clientstatistiken bezüglich Verwendungscharakteristika der Benutzerschnittstellen zusammenstellen; und
eine Empfehlungsmaschine (332), die die Clientstatistiken analysiert, um Benutzerschnittstellenempfehlungen zu erzeugen, wobei die Benutzerschnittstellenempfehlungen jeweils eine Vielzahl von Benutzerschnittstellenelementen, für die die Empfehlungsmaschine (332) korrespondierende eine der Clientstatistiken getrennt bewertet, enthalten, wobei die Empfehlungsmaschine (332) Clientprofilinformationen (328) bezüglich jeweiliger Vorrichtungsbenutzer und die Clientvorrichtungen beim Erzeugen der Benutzerschnittstellenempfehlungen nutzt, wobei die Clientvorrichtungen die Benutzerschnittstellen gemäß den Benutzerschnittstellenempfehlungen dynamisch aktualisieren.

2. System nach Anspruch 1, wobei die Empfehlungsmaschine (332) in einem Netzwerkserver (118), der mit jeder der Clientvorrichtungen (126) in dem elektronischen Netzwerk (110) bidirektional kommuniziert, implementiert ist.

3. System nach Anspruch 1, wobei die Benutzerschnittstellen als grafische Benutzerschnittstellen, angeordnet auf jeweiligen Anzeigevorrichtungen (516) der Clientvorrichtungen (126), implementiert sind.

4. System nach Anspruch 1, wobei die Clientstatistiken Client-Navigationshistorien, Zeitinformationen für die Client-Navigationshistorien und Verwendungsstatistiken für jeweilige Benutzerschnittstellenfunktionalitäten enthalten.

5. System nach Anspruch 1, wobei die Empfehlungsmaschine (332) die Clientstatistiken analysiert, um ein statistisches Modell abzuleiten, das Verwendungshäufigkeiten für Benutzerschnittstellenfunktionalitäten repräsentiert, wobei die Empfehlungsmaschine (332) das statistische Modell nutzt, um die Benutzerschnittstellenempfehlungen zu erzeugen.

6. System nach Anspruch 5, wobei die Benutzerschnittstellenempfehlungen beliebigen häufig genutzten einen der Benutzerschnittstellenfunktionalitäten in Bezug auf anderen, weniger häufig genutzten einen der Benutzerschnittstellenfunktionalitäten eine Anzeigepriorität geben.

7. System nach Anspruch 1, wobei die Benutzerschnittstellenelemente enthalten, ob verschiedene im Voraus definierte Symbole und Menüauflistungen, spezifische Symbol- oder Menüorte/-reihenfolgen, Farbcharakteristika für die Benutzerschnittstellengegenstände und Abschnitte der Benutzerschnittstelle auf der Vorrichtungsanzeige (516) und verschiedene Typen von auswählbaren Benutzerschnittstellenfunktionalitäten anzuzeigen oder zu verbergen sind.

8. System nach Anspruch 1, wobei die Empfehlungsmaschine (332) ein Zeitfunktionsmodul enthält, das verschiedene Elementkennziffern für die Benutzerschnittstellenelemente in Abhängigkeit von einer Zeitfunktion, die abhängig von einem Tageszeit-Parameter, einem Wochenzeit-Parameter, einem Monatszeit-Parameter und einem Jahreszeit-Parameter variiert, berechnet.

9. System nach Anspruch 1, wobei die Clientprofilinformationen (328) Benutzerpräferenzen, demografische Informationen, Browsinggewohnheiten und Clientvorrichtungsinformationen enthalten.

10. System nach Anspruch 1, wobei die Empfehlung individuelle Clientstatistiken und Gruppen-Clientstatistiken nutzt, die Benutzerschnittstellenempfehlungen zu erzeugen, wobei die individuellen Clientstatistiken von jeder der Clientvorrichtungen sind, die Gruppen-Clientstatistiken kombinierte statistische Informationen von einigen oder allen der Clientvorrichtungen repräsentieren.

11. System nach Anspruch 1, wobei ein Netzwerkserver (118) die Clientvorrichtungen (126) regelmäßig abfragt, um die Clientstatistiken zum lokalen Speichern in einer zentralen Statistikdatenbank (320) zu erhalten.

12. System nach Anspruch 1, wobei die Empfehlungsmaschine (332) Elementkennziffern für Benutzerschnittstellenelemente basierend auf jeweiligen Nutzungshäufigkeitscharakteristika und anderen Kennzifferdaten aus den Clientstatistiken berechnet.

13. Verfahren zum dynamischen Implementieren von Benutzerschnittstellen in einem elektronischen Netzwerk, umfassend:
Nutzen von Clientvorrichtungen zum Zusammenstellen von Clientstatistiken bezüglich Verwendungscharakteristika der Benutzerschnittstellen;
Analysieren der Clientstatistiken mit einer Empfehlungsmaschine, um Benutzerschnittstellenempfehlungen zu erzeugen, wobei die Benutzerschnittstellenempfehlungen jeweils eine Vielzahl von Benutzerschnittstellenelementen, für die die Empfehlungsmaschine (332) korrespondierende eine der Clientstatistiken getrennt bewertet, enthalten, wobei die Empfehlungsmaschine (332) Clientprofilinformationen (328) bezüglich jeweiliger Vorrichtungsbenutzer und die Clientvorrichtungen beim Erzeugen der Benutzerschnittstellenempfehlungen nutzt; und
dynamisches Aktualisieren der Benutzerschnittstellen gemäß den Benutzerschnittstellenempfehlungen.

## Revendications

1. Système de mise en oeuvre dynamique d'interfaces-utilisateurs dans un réseau électronique (110), comprenant :
des dispositifs clients (126) couplés audit réseau électronique (110), lesdits dispositifs clients (126) compilant des statistiques clients concernant des caractéristiques d'utilisation desdites interfaces-utilisateurs ; et
un moteur de recommandations (332) qui analyse lesdites statistiques clients dans le but de générer des recommandations d'interface-utilisateur, lesdites recommandations d'interface-utilisateur comportant chacune une pluralité d'éléments d'interface-utilisateur pour lesquels ledit moteur de recommandations (332) évalue séparément des statistiques clients correspondantes parmi lesdites statistiques clients, ledit moteur de recommandations (332) utilisant des informations de profil client (328) concernant des utilisateurs de dispositif respectifs et lesdits dispositifs clients lors de la génération desdites recommandations d'interface-utilisateur, lesdits dispositifs clients mettant dynamiquement à jour lesdites interfaces-utilisateurs selon lesdites recommandations d'interface-utilisateur.

2. Système selon la revendication 1, dans lequel ledit moteur de recommandations (332) est mis en oeuvre sur un serveur de réseau (118) qui communique bidirectionnellement avec chacun desdits dispositifs clients (126) dans ledit réseau électronique (110).

3. Système selon la revendication 1, dans lequel lesdites interfaces-utilisateurs sont mises en oeuvre sous forme d'interfaces-utilisateurs graphiques situées sur des dispositifs d'affichage (516) respectifs desdits dispositifs clients (126).

4. Système selon la revendication 1, dans lequel lesdites statistiques clients comportent des historiques de navigation clients, des informations temporelles pour lesdits historiques de navigation clients et des statistiques d'utilisation pour des fonctionnalités respectives d'interface-client.

5. Système selon la revendication 1, dans lequel ledit moteur de recommandations (332) analyse lesdites statistiques clients dans le but d'en déduire un modèle statistique représentant des fréquences d'utilisations pour des fonctionnalités d'interface-utilisateur, ledit moteur de recommandations (332) utilisant ledit modèle statistique dans le but de générer lesdites recommandations d'interface-utilisateur.

6. Système selon la revendication 5, dans lequel lesdites recommandations d'interface-utilisateur donnent une priorité d'affichage à toutes fonctionnalités d'interface-utilisateur fréquemment utilisées parmi lesdites fonctionnalités d'interface-utilisateur par rapport à d'autres fonctionnalités d'interface-utilisateur peu fréquemment utilisées parmi lesdites fonctionnalités d'interface-utilisateur.

7. Système selon la revendication 1, dans lequel lesdits éléments d'interface-utilisateur comportent l'opportunité d'afficher ou de dissimuler divers icônes et listages de menus prédéfinis, des emplacements/classements particuliers d'icônes ou de menus, des caractéristiques de couleur pour lesdits articles d'interface-utilisateur et des parties de ladite interface-utilisateur sur ledit affichage de dispositif (516), et différents types de fonctionnalités sélectionnables d'interface-utilisateur.

8. Système selon la revendication 1, dans lequel ledit moteur de recommandations (332) comporte un module de fonction temporelle qui calcule différents scores d'éléments pour lesdits éléments d'interface-utilisateur selon une fonction temporelle qui varie selon un paramètre moment du jour, un paramètre moment de la semaine, un paramètre moment du mois et un paramètre moment de l'année.

9. Système selon la revendication 1, dans lequel lesdites informations de profil client (328) comportent des préférences utilisateurs, des informations démographiques, des habitudes de consultation et des informations de dispositif client.

10. Système selon la revendication 1, dans lequel ladite recommandation utilise des statistiques clients individuelles ou des statistiques clients groupées dans le but de générer lesdites recommandations d'interface-utilisateur, lesdites statistiques clients individuelles étant issues de chacun desdits dispositifs clients, lesdites statistiques clients groupées représentant des informations statistiques combinées issues de certains ou de la totalité desdits dispositifs clients.

11. Système selon la revendication 1, dans lequel un serveur de réseau (118) interroge périodiquement lesdits dispositifs clients (126) dans le but d'obtenir lesdites statistiques clients en vue de les enregistrer localement dans une base de données centrale de statistiques (320).

12. Système selon la revendication 1, dans lequel ledit moteur de recommandations (332) calcule des scores d'éléments pour des éléments d'interface-utilisateur sur la base de caractéristiques de fréquence d'utilisation respectives et d'autres données d'établissement de score issues desdites statistiques clients.

13. Procédé de mise en oeuvre dynamique d'interfaces-utilisateurs dans un réseau électronique, comprenant :
l'utilisation de dispositifs clients pour compiler des statistiques clients concernant des caractéristiques d'utilisation desdites interfaces-utilisateurs ; et
l'analyse desdites statistiques clients au moyen d'un moteur de recommandations dans le but de générer des recommandations d'interface-utilisateur, lesdites recommandations d'interface-utilisateur comportant chacune une pluralité d'éléments d'interface-utilisateur pour lesquels ledit moteur de recommandations (332) évalue séparément des statistiques clients correspondantes parmi lesdites statistiques clients, ledit moteur de recommandations (332) utilisant des informations de profil client (328) concernant des utilisateurs de dispositif respectifs et lesdits dispositifs clients lors de la génération desdites recommandations d'interface-utilisateur ; et
la mise à jour dynamique desdites interfaces-utilisateurs selon lesdites recommandations d'interface-utilisateur.
